# EUROPEAN PATENT SPECIFICATION

(11) **EP 1 550 614 B1**
(45) Date of publication and mention of the grant of the patent: **27.06.2007**
(21) Application number: 03750730.8
(22) Date of filing: 23.09.2003
(51) Int. Cl.: B65D 6/16, F16B 12/10

(54) **SET OF JUNCTION FITTINGS AND SECTIONS USED TO FORM FRAMES WHICH ARE INTENDED FOR THE PRODUCTION OF PACKAGING BOXES AND CHESTS**
SATZ VON ANSCHLUSSTEILEN UND PROFILEN, DIE ZUR HERSTELLUNG VON RAHMEN VERWENDET WERDEN, WELCHE FüR DIE HERSTELLUNG VON VERPACKUNGSSCHACHTELN UND KÄSTEN BESTIMMT SIND
ENSEMBLE DE PROFILS ET DE FERRURES D'ASSEMBLAGE POUR OSSATURES, DESTINES A LA FABRICATION DE BOITES ET DE CAISSES DE RANGEMENT

(30) Priority: 27.09.2002 ES 200202194
(43) Date of publication of application: 06.07.2005
(73) Proprietor: Garcia Merino, Miguel Angel, 28830 Madrid (ES)
(72) Inventor: Garcia Merino, Miguel Angel, 28830 Madrid (ES)
(74) Representative: Gonzalez Gomez, Maria Virtudes
(86) International application number: PCT/ES2003/000472
(87) International publication number: WO 2004/028911

(56) References cited:
- EP-A1- 0 432 053
- ES-A6- 2 009 541
- ES-U- 249 466
- ES-U- 287 011
- GB-A- 857 761
- US-A- 4 558 797
- US-A- 5 620 273

## Description

As indicated in the title of this patent description, this invention relates to the design of a set of sections and connecting fittings for the formation of frames intended for the manufacture of boxes and bins for use as packaging materials. Said set has been designed and produced in order to provide numerous notable advantages over other existing means for simiiar purposes.

The set is designed to ensure that when the sections and fittings are suitably joined to one another, they form a frame which in turn receives other materials (panels, boards, plastic sheets, etc.), thereby providing a harmonious, rigid receptacle characterised by its ease of construction, versatility of shapes and dimensions, and suitability for the purpose for which it is to be used.

### BACKGROUND TO THE INVENTION

A wide variety of packaging materials are currently know, ranging from cardboard boxes, cases produced with panels and nails, assembled cases, metal boxes, etc.
GB857761A discloses a set of sections and connection fittings according to the preamble of claim 1.

The purpose of each of these casings is the protection of the material placed inside them, and although they perform their function a priori, they do not always do so satisfactorily, which is why another type of packaging giving better performance is increasingly in demand. Moreover, few systems or methods are known with which packaging materials can be produced which meet a number of conditions demanded by the market, including the following:
that they must provide a sufficient guarantee that the material placed in it arrives in perfect condition at its destination;
that the assembly and disassembly operations can be carried out without expert knowledge in the field;
that the packaging material can be re-used, recycled or stored in confined spaces;
that the packaging material is not disposed of once it has fulfilled its function, or because one of its components is damaged;
that it falls within a good quality/price ratio.

Although document ES 2009541A (P8800492) referred to Section System, preferably of wood, with connecting fittings between sections, enables us to form frames, they are intended for the packing of furniture and partitions, which is why, although they have a certain similarity, this new set of sections and connecting fittings, designed for a different well differentiated purpose mentioned above, themselves constitute in and of itself a new invention with the right to protection applied for.

The notable differences that exist between the aforementioned patent and this new application may be observed, the most significant being:
- The purposes for which they are intended are totally different.
- The design of the sections is novel, exhibiting a series of well differentiated grooves and recesses.
- The connecting fittings have been developed to form a single piece, exhibiting a series of new grooves and recesses, incorporating appendices for coupling to the sections, with a novel configuration giving them greater resistance to both vertical and horizontal shrinkage and tensile stresses.
- The system for fixing the fittings to the sections is an external system of pins or screws.

It is therefore concluded that the only similarity that exists is the formation of frames and the connecting confluence of a system of Cartesian coordinates, used mutually for centuries by joiners and metalworkers.

### DESCRIPTION OF THE INVENTION

We know that every frame is formed by a set of parts or pieces suitably connected and assembled together.

This invention involves providing a simple solution to something as complex as the production of packaging materials, although it always involves adapting to certain market requirements. Moreover, it should not be forgotten that there is now an increasing awareness that natural resources should be exploited in a responsible manner, which is why this patent has been developed for the best possible use and exploitation of these resources.

Five improvements over the prior art may be highlighted.

Firstly, every packaging material will be produced exactly as required without the need for personnel who are specialised or experts in the field.

Secondly, both in transit and after being used, a packaging material will occupy a space of the same dimensions, once produced, whether it is full or empty, while with this patent we reduce this space both before transport and after the use of the packaging material, since it can be assembled and disassembled when required, and it would only occupy this space at the time of its actual use for which it has been produced.

Furthermore, any of the components, whether they be sections, connection fittings or any other component forming part of the packaging material, may be replaced with the minimum of effort.

It may be remarked that the robustness of the packaging material means that it not only guarantees correct behaviour during its handling and transport, but it can also be stacked as far as the safety measures allow.

Lastly, the method of producing this packaging material provides a wide selection of components that can be selected for incorporation in the frame (plywood, agglomerate or "tablex" panels, aluminium, iron or methacrylate sheets, cardboard, plaster, fabric and the like, etc.), together with the other type of materials which will be used on the inside to secure the material to be packed (polyspan, isocyanate foams, resins, spongy materials, spring suspension, etc.). It is concluded that this set not only meets the possible requirements but allows for considerable expansion of them and provides substantial improvements.

The sections can be produced in various types of materials, such as wood, plastic, methacrylate, aluminium, iron, etc.

To do so, a piece of square or rectangular cross-section is employed, according to the two types of section to be produced as disclosed by the invention.

In the sections of square cross-section two of the opposing vertices are removed or bevelled, the other vertices thus forming two symmetrical faces, in one of which are made grooves or channels in the shape of a cross serving to house the connection fitting, whilst the adjacent faces may exhibit several staggered longitudinal grooves or recesses. The other symmetrical face which was formed when the vertex was removed is left as a visible face and is used to fix through it the connection fitting by means of screws or pins. Its adjacent faces can be left smooth or may exhibit one or more staggered recesses.

The sections of rectangular cross-section incorporate longitudinal grooves and optionally tiny longitudinal protrusions, in either case incorporating fins that emerge from their ends for coupling to the aforementioned sections with a square cross-section.

The connection fittings will be preferably produced from metal, plastic or any other material which combines characteristics of flexure and traction suitable for its use, to determine the top of the corner of the frame and constitute the connecting element between the developed sections of square cross-section, providing a firm, stable bond. The body of the fitting consists of a cube or central core with its three outer edges recessed or bevelled. In accordance with the common line of the sections with a square cross-section, the vertex joining the three inner faces has been bevelled equidistantly to form a plane in which an opening is made in case it is necessary to attach a ring. Several prismatic protrusions with a cross-shaped section project from the three adjacent faces, coinciding with the grooves made in the sections with a square cross-section. Several grooves or recesses are made on the edges of coincidence of the inner faces, these grooves or recesses coinciding with those made in the sections to allow the optional coupling of panels.

### DESCRIPTION OF THE DRAWINGS

To complete the description being made and in order to aid a better understanding of the characteristics of the invention, according to an example of a preferred embodiment, a set of drawings is accompanied as an integral part of this description where for purposes of illustration and in a non-limiting manner the following is represented:
Figures 1, 2 and 3 correspond respectively to perspective views of different sections of group A, designed to be assembled by their ends with a connection fitting, performed according to the object of the present invention.
Figures 4, 5, 6 and 7 show four different sections belonging to group B, which are supporting sections for cohesion of the sections of group A.
Figures 8, 9 10 and 11 show corresponding perspective views of four sets of connection fittings, composed by four pieces, which serve as a link to certain sections of group A.
Figure 12 shows an exploded view of a mode of connecting a set of sections of group with one of the connection fittings, as well as the fixing of a section of group B to one of the sections of group A.
Figure 13 shows a side elevation and cross section view of a bin made from the various elements of the previous sections.
Figure 14 shows a perspective view of a case made from sections of group A, specifically those shown in figure 2, and with the connection fittings shown in figure 9.

### PREFERRED EMBODIMENT OF THE INVENTION

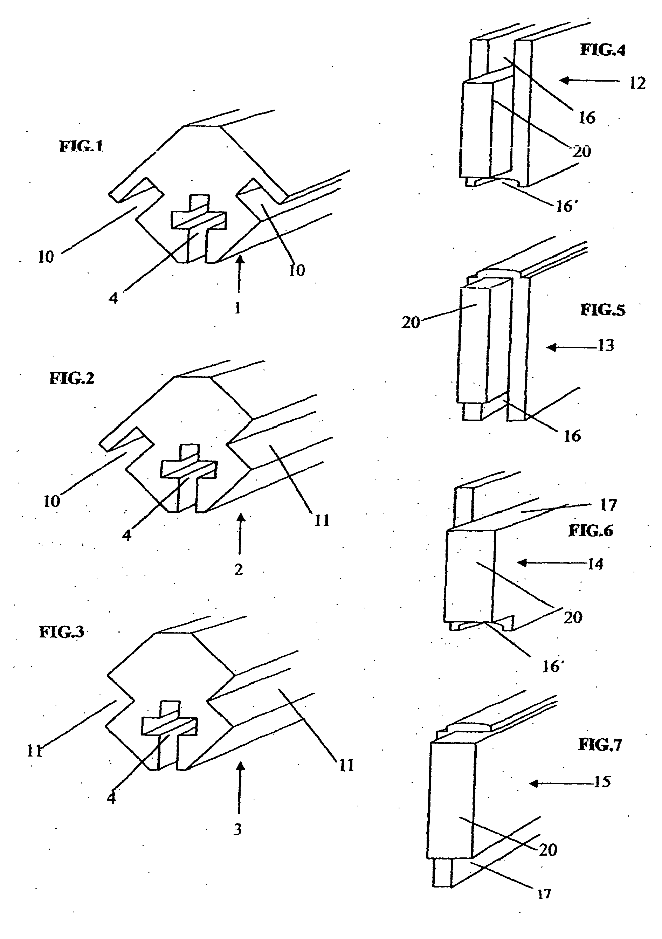

As shown in figures 1, 2 and 3 the sections (1), (2) and (3) corresponding to group A of the sections incorporate a longitudinal groove with a cross-shaped section (4) that allows to assemble said sections in the various connection fittings (5), (6), (7) and (8) through appendices (9) that emerge perpendicularly from them, said sections (1), (2) and (3) also being provided with grooves (10) for coupling diverse elements, as well as the sections of group B.

The recesses (11) also allow to position various components such as panels, boards, etc. and fix them to the section by screws or nails.

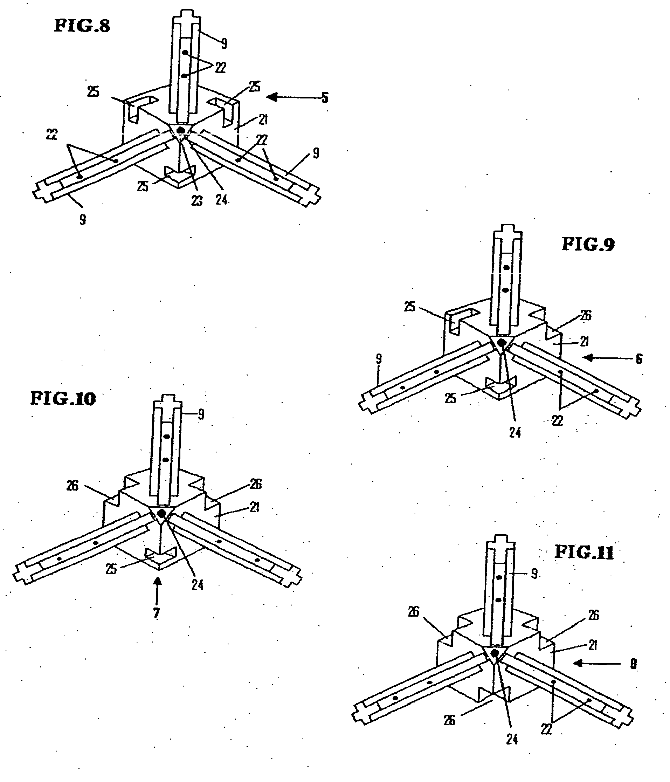

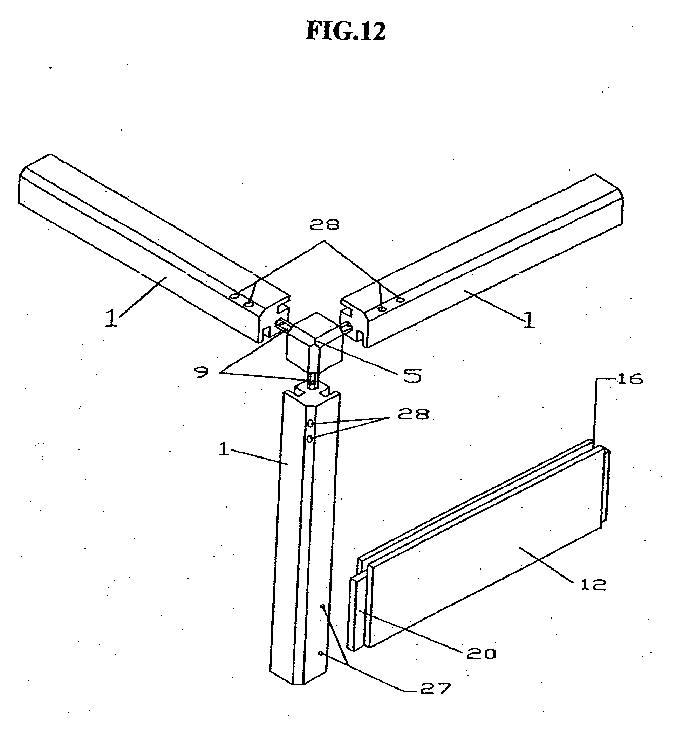

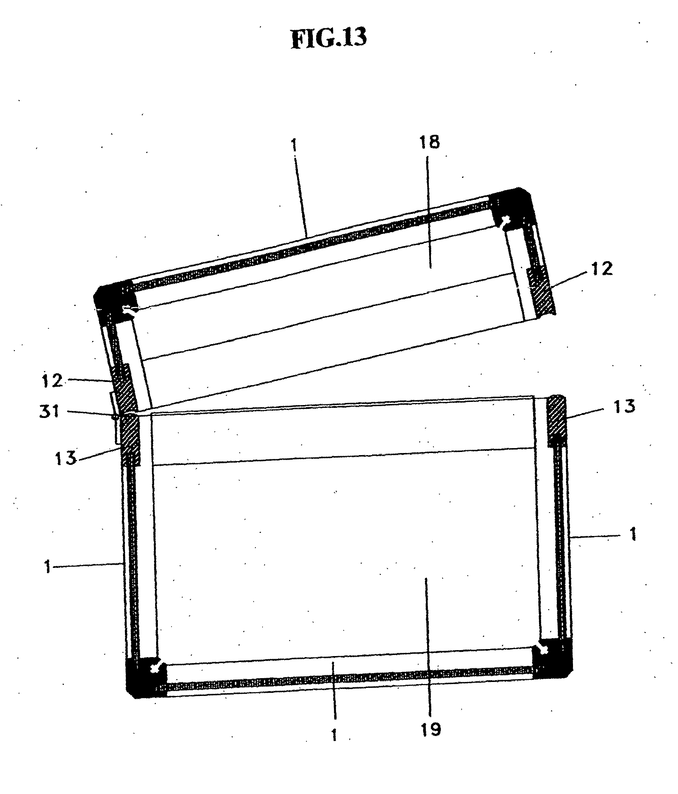

The sections (12), (13), (14) and (15) shown in figures 4, 5, 6 and 7 correspond to sections of group B. These are supporting sections, their main function being to provide cohesion with the sections of group A so that between the two they support panels that are coupled to the grooves (16-16') or positioned on the recesses (17). Said panels will also incide on the grooves (10) and recesses (11) of the sections of group A, as mentioned above, when intending to create different elements such as the one shown in figure 13, in which the panels constituting the cover (18) or body (19) are framed on their edges by sections of both types, where the sections of different types can be fitted to one another through the fins (20) on their ends, on the grooved areas (10) and/or (11) as shown particularly in figure 12.

The fittings (5), (6), (7) and (8) are constituted by four pieces, each one being designed to act as a link with certain sections of group A, thereby providing a confluence of the union of the three sections at one point, according to the imaginary direction of the three axes of a Cartesian coordinate system. The type of connection fitting and section to be used will depend on the design of the packaging and on whether it must have one, two, three, our, five or six removable faces without having to disassemble the frame.

The connection fittings will be constituted from a cube (21) that acts as a central core in which three of its faces joined to a single vertex are external and its edges are bevelled, with corresponding appendices (9) emerging perpendicularly from the remaining faces that incide on the grooves with a cross-shaped section (4) of the sections or group A to be attached by corresponding screws or pins through the orifices (22) provided for such purpose.

Similarly, the vertex at which meet the three inner edges of the cue (21) is bevelled, to form a new face (23) in which an orifice (24) is made that allows to attach rings which, if required, will allow to attach an element suspended from springs.

The difference between the four connection fittings (5), (6), (7) and (8) is limited to the number of grooves (25) and recesses (26) made in the edges or vertices of the central core (21).

As shown in figure 12, the sections (1) of group A can be joined for example to the connection fitting (5), while one of the sections of group B, in this case the section (12), is joined to the aforementioned section (1), immobilised by a pair of screws inserted through the orifices (27) of said sections, while the appendices (9) of the connection fittings are immobilised with respect to the sections of group A after they are connected by a pair of screws inserted through the orifices (28) provided in said sections.

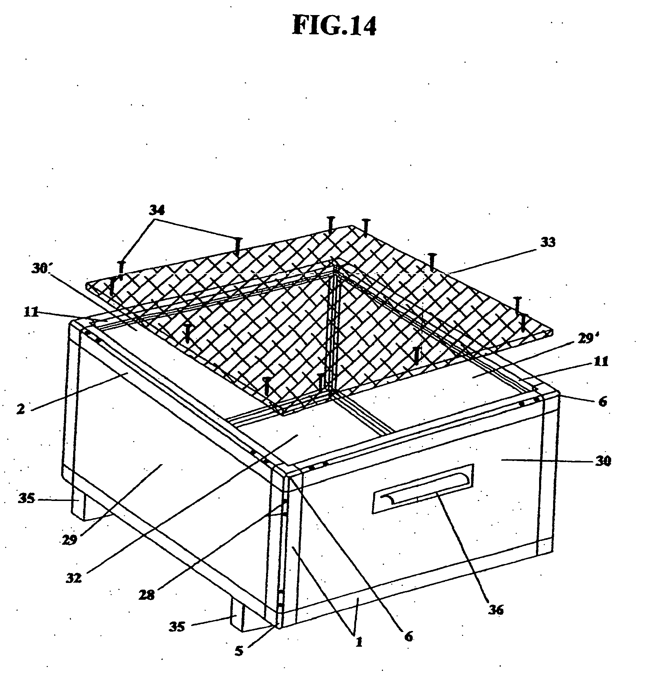

Based on these elements it is possible to make a great variety of drawers and cases for packaging as those shown in figures 13 and 14, connecting the frame formed by the connection fittings and the sections of group A and group B with the panels or boards (29), (30) etc. to produce a solid and harmonious assembly.

If it is desired to construct a case such as that shown in figure 13, in addition to the aforementioned elements it is necessary to use a hinge (31) that will relate the cover and body of said case.

If it is desired to construct a drawer, such as that shown in figure 14, it is possible to use sections (1) of group A together with the connection fittings (5) and (6) attached by screws that pass through the aforementioned orifices (28), as well as the corresponding panels (29), (29'), (30), (30') and (32), the assembly being left ready to receive a panel (33) in the recess (11) provided which will be attached to the sections (2) by screws (34).

Lastly, corresponding crossbars (35) are disposed under the bottom base of the drawer to support it and a handle (36) is disposed on the front panel (30) to facilitate its displacement, thereby concluding the drawer.

## Claims

1. Set of sections and connection fittings for forming frames intended for the production of drawers and cases for use as packaging materials of the type assembled in modules, forming three-dimensional structures or frames to which are attached boards or panels with the aid of screws, **characterised in that** it is constituted by a group of sections (1), (2) and (3) with a rectangular prismatic shape with two bevelled opposite edges, one of which has a longitudinal groove (4) with a cross-shaped section, in which said sections may incorporate longitudinal recesses (11) for attaching said boards, and/or longitudinal grooves (10) for perpendicular attachment of a second group of sections (12), (13), (14) and (15) with a basically rectangular prismatic shape, with longitudinal grooves (16) or staggered recesses (17) for attaching said boards, being provided on their ends with corresponding fins (20) suitably sized for coupling to the aforementioned grooves (10) of the first group of sections, and said group incorporating a set of connection fittings (5), (6), (7) and (8) for attaching three sections of the first group, so that they meet at one point according to the imaginary direction of the three axes of a Cartesian coordinate system, the connection fittings being constituted from a cubic piece (21) from which emerge perpendicularly from thee of its adjacent faces corresponding prismatic protrusions (9) with a cross-shaped section, suitably sized for coupling to the grooves (4) of the first group of sections (1), (2) and (3).

2. Set of sections and connection fittings for the formation of frames intended for the production of drawers and cases for use as packaging materials, according to claim 1, **characterised in that** said cubic pieces (21) of the connection fittings (5), (6), (7) and (8) are provided on their inner edges with recesses (26) and/or grooves (25) for attaching said boards.

3. Set of sections and connection fittings for the formation of frames intended for the production of drawers and cases for use as packaging materials, according to the previous claims, **characterised in that** the aforementioned cubic pieces (21) of the connection fittings (5), (6), (7) and (8) have their three external edges and the vertex opposite them bevelled, in which an orifice (24) is incorporated to attach rings.

4. Set of sections and connection fittings for forming frames intended for the production of drawers and cases for use as packaging materials, according to previous claims, **characterised in that** the sections (1), (2) and (3) incorporate orifices (28) on their bevelled edge which, in cooperation with the corresponding screws, allow to immobilise the appendix (9) housed inside it.

5. Set of sections and connection fittings for the formation of frames intended for the production of drawers and cases for use as packaging materials, according to previous claims, **characterised in that** the sections (1) and (2) incorporate orifices (27) on their external faces which in cooperation with corresponding screws allow to immobilise the group of sections (12), (13), (14) and (15) that can be coupled in their grooves (10).

## Patentansprüche

1. Satz von Bausatzteilen und Anschluss-Stücken zur Bildung von Rahmengestellen, gedacht für die Herstellung von Schubladen und Behältern und als Verpackungsmaterial dergestalt dienen, dass sie in Modulen zusammengesetzt werden, drei-dimensionale Gefüge oder Gestelle bilden, an welchen Tafeln oder Platten mit Hilfe von Schrauben befestigt werden, und **dadurch gekennzeichnet sind, dass** er aus einer großen Gruppe von Bausatzteilen (1), (2) und (3) in einer rechteckig prismatischen Form gebildet wird, mit zwei gegenüberliegenden Kanten, von denen eine einen Längsnut (4) mit einem kreuzförmigen Bausatzteil hat, in welchem besagte Bausatzteile Längsvertiefungen (11) enthalten können zur Befestigung besagter Tafeln und/oder Längsnuten (10) zur senkrechten Befestigung einer zweiten Gruppe von Bausteinen (12), (13), (14) und (15) mit einer hauptsächlich rechteckig prismatischen Form, mit Längsnuten (16) oder versetzten Vertiefungen (17) zur Befestigung besagter Tafeln, die an ihren Enden mit dazugehörigen Rippen (20) ausgestattet sind, in der passenden Größe zur Kopplung an die zuvor erwähnten Nuten (10) der ersten Bausteingruppe; und besagte Gruppe beinhaltet einen Satz Anschluss-Stücke (5), (6), (7) und (8) zur Befestigung von drei Bausatzteilen der ersten Gruppe, so dass sie sich an einem Punkt gemäß der imaginären Richtung der drei Achsen des kartesischen Koordinatensystem treffen, die Anschluss-Stücke werden durch ein würfelförmiges Stück (21) gebildet, aus welchem senkrecht aus drei von seinen angrenzenden Flächen dazugehörige prismatische Vorsprünge (9) mit einem kreuzförmigen Bauteil hervorkommen, in der passenden Größe zur Kopplung an die Nute (4) von der ersten Gruppe der Bausatzteile (1), (2) und (3).

2. Satz an Bausatzteilen und Anschluss-Stücken zur Bildung von Rahmengestellen, gedacht zur Herstellung von Schubladen und Behältern, verwendbar als Verpackungsmaterialien, sind laut dem vorhergegangenen Anspruch **dadurch gekennzeichnet, dass** die davor erwähnten würfelförmigen Stücke (21) der Anschluss-Stücke (5), (6), (7) und (8) an den drei Aussenkanten mit Vertiefungen (26) und/oder Nuten (25) zur Befestigung besagter Tafeln ausgestattet sind.

3. Satz von Bausatzteilen und Anschluss-Stücken zur Bildung von Rahmengestellen, gedacht zur Produktion von Schubladen und Behältern, verwendbar als Verpackungsmaterialien, sind laut den vorangegangenen Ansprüchen **dadurch gekennzeichnet, dass** die vorher erwähnten würfelförmigen Stücke (21) der Anschluss-Stücke (5), (6), (7) und (8) ihre drei Außenkanten haben und die Ecke gegenüber abgeflacht ist, in welche eine Öffnung (24) eingebaut ist, um Anschlagringe zu befestigen.

4. Satz von Bausatzteilen und Anschluss-Stücken zur Bildung von Rahmengestellen, gedacht zur Herstellung von Schubladen und Behältern, verwendbar als Verpackungsmaterialien, sind laut den vorangegangenen Ansprüchen **dadurch gekennzeichnet, dass** die Bausatzteile (1), (2) und (3) Öffnungen (28) an ihren abgeflachten Ecken haben, welche es durch die Mitwirkung dazugehöriger Schrauben erlauben, das Anhangsatzstück(9), das im Inneren beherbergt wird, zu immobilisieren.

5. Satz an Bausatzteilen und Anschluss-Stücken zur Bildung von Gestellen, gedacht zur Produktion von Schubladen und Behältern, verwendbar als Verpackungsmaterialien, sind laut den vorangegangenen Ansprüchen **dadurch gekennzeichnet, dass** die Bausatzteile (1) und (2) Öffnungen (27) an ihren Außenflächen haben, welche es durch Mitwirkung dazugehöriger Schrauben erlauben, die Gruppe von Bausteinen (12), (13), (14) und (15), welche an die Nuten (10) gekoppelt werden können, zu immobilisieren.

## Revendications

1. Ensemble de sections et raccords de connexion pour former des bâtis destinés à la production de tiroir et des caisses pour leur utilisation comme matériels d'emballage du type assemblé dans des modules former des structures ou des bâtis tridimensionnels auxquels sont fixer des planches ou des panneaux à l'aide de vis, **caractérisé en ce qu'**il est constitué d'un groupe de sections (1), (2) et (3) avec une forme prismatique rectangulaire avec deux bords biseautés opposés, l'un d'eux a une rainure longitudinale (4) avec une section cruciforme, dans laquelle lesdites sections peuvent incorporer des évidements longitudinaux (11) pour fixer lesdites planches, et7ou des rainures longitudinales (10) pour la fixation perpendiculaire d'un deuxième groupe de sections (12), (13), 14) et (15) ayant une forme de prismatique essentiellement rectangulaire, avec des rainures longitudinales (16) ou des évidements échelonnés (17) pour fixer lesdites planches, étant pourvues à leurs extrémités d'ailettes correspondantes (20) dimensionnées adéquatement pour s'accoupler rainures (10) précités du premier groupe de sections, et ledit groupe incorporant un ensemble de raccords de connexion (5), (6), (7) et (8) pour fixer trois sections du premier groupe, de manière ce qu'elles se rencontrent sur un point selon la direction imaginaire des trois axes d'un système de coordonnées cartésiennes, les raccords de connexion étant constitués par une pièce cubique (21) à partir de laquelle émergent perpendiculairement, à partir de trois de ses faces attenantes, des protubérances prismatiques correspondantes avec une section cruciforme, dimensionnée adéquatement pour s'accoupler aux rainures (4) du premier groupe de sections (1), (2) et (3).

2. Ensemble de sections et raccords de connexion pour la formations de bâtis destinés à la production de tiroirs et caisses pour leur utilisation comme matériels d'emballage, selon la revendication 1, **caractérisé en ce que** lesdites pièces cubiques (21) des raccords de connexion (5), (6), (7) et (8) sont pourvues sur leurs bords intérieurs d'évidements (26) et/ou de rainures (25) pour fixer lesdites planches.

3. Ensemble de sections et raccords de connexion pour la formations de bâtis destinés à la production de tiroirs et caisses pour leur utilisation comme matériels d'emballage, selon les revendications précédentes, **caractérisé en ce que** les pièces cubiques (21) précitées des raccords de connexion (5), (6), (7) et (8) ont leurs trois bords extérieurs et le sommet opposés et biseautés, dans lesquels est incorporé (24) un orifice pour fixer des anneaux.

4. Ensemble de sections et raccords de connexion pour la formations de bâtis destinés à la production de tiroirs et caisses pour leur utilisation comme matériels d'emballage, selon les revendications précédentes, **caractérisé en ce que** les sections (1), (2) et (3) incorporent des orifices (28) sur leurs bords biseautés qui, en coopération avec les vis correspondantes, permettent l'immobilisation de l'appendice (9) logé en son sein.

5. Ensemble de sections et raccords de connexion pour la formations de bâtis destinés à la production de tiroirs et caisses pour leur utilisation comme matériels d'emballage, selon les revendications précédentes, **caractérisé en ce que** les sections (1) et (2) incorporent des orifices (27) sur leurs faces externes qui en coopération avec les vis correspondantes permettent l'immobilisation du groupe de sections (12), (13), (14) et (15) qui peuvent d'accoupler dans leurs rainures (10).
